Europäisches Patentamt

European Patent Office

Office européen des brevets

Publication number: **0 316 551**

**A2**

# EUROPEAN PATENT APPLICATION

(21) Application number: 88116177.2

(22) Date of filing: 30.09.88

(51) Int. Cl.⁴ **G01N 21/59 , G01M 3/04**

(30) Priority: 18.11.87 JP 290888/87

(43) Date of publication of application:
24.05.89 Bulletin 89/21

(84) Designated Contracting States:
CH DE FR IT LI

(71) Applicant: **JUNKOSHA CO. LTD.**
**25-25, Miyasaka 2-chome**
**Setagaya-ku Tokyo 156(JP)**

(72) Inventor: **Imaizumi, Haruo**
**5-102 Nishi-Asuma-Danchi**
**1813-1 Nishi-Asumz Ohmiya-shi Saitama(JP)**

(74) Representative: **Kehl, Günther, Dipl.-Phys. et al**
**Patentanwälte HAGEMANN & KEHL**
**Ismaninger Strasse 108 Postfach 860329**
**D-8000 München 86(DE)**

(54) Light transmitting-type liquid detection sensor.

㊄ Light transmitting type liquid detection sensor (1) having a light sending means (3), a light receiving means (4), a liquid contact means (2) provided between said light sending means (3) and said light receiving means (4), wherein the light transmissivity of said liquid contact means (2) changes according to the amount of absorption of the liquid to be detected, and a light amount recognition means (11) which is optically connected to said light receiving means (4).

The sensor is intrinsically safe (explosion proof) and superior in long term reliability as compared to sensors of the prior art.

Fig. 1

## Light Transmitting-Type Liquid Detection Sensor

The present invention relates to a liquid detection sensor utilizing the intrinsically safe characteristic of an optical system.

The inventor of the present invention has participated in the development of a liquid detection sensor as already proposed in the Japanese patent with publication number No. 59-47256, "liquid detection element" wherein at least two conductors are separated by porous expanded polytetrafluoroethylene incorporating a conductive substance. Said invention is based on the detection principle that the electrical resistance between the conductors changes when liquid enters into the porous expanded polytetrafluoroethylene incorporating a conductive substance, this change in resistance being detected. In this case, since a flow of electrical current is applied to the liquid to be detected, and should the liquid be inflammable, such as oil for instance, application of this detection principle is restricted by it not being intrinsically safe (explosion proof).

The present invention has been developed to solve the aforementioned problem and provides a liquid detection sensor which presents no problem as regards the intrinsically safe characteristic and which is used to detect the leakage amount of liquid by detecting the amount of light transmission which varies according to penetration of the liquid to be detected into the liquid contact means.

The present invention has been developed to solve problems of the prior art and comprises a light sending means, a light receiving means, a liquid contact means, provided between said light sending means and said light receiving means, wherein the light transmissivity changes depending on the amount of absorption of liquid to be detected, and a light amount recognition means which is optically connected to said light receiving means.

The light transmission-type liquid detection sensor of the present invention comprises said light sending means and said light receiving means with said liquid contact means inbetween as explained above. Therefore, when the liquid to be detected penetrates into said liquid contact means, the amount of light sent from said light sending means to said light receiving means increases or decreases. Said light receiving means is optically connected to said light amount recognition means and accordingly, penetration of liquid can be detected as an increase or decrease in the amount of light.

Since the liquid can be detected optically as explained above, the liquid detection sensor of the present invention is intrinsically safe (explosion proof). One way of carrying the invention is described in detail below with reference to drawings which illustrate only one specific embodiment:

Fig. 1 is a vertical sectional view of a light transmission-type liquid detection sensor of the present invention;

Fig. 2 is a front elevation of a liquid contact means; and

Fig. 3 is a front elevation indicating the condition in which the liquid to be detected penetrates into the liquid contact means.

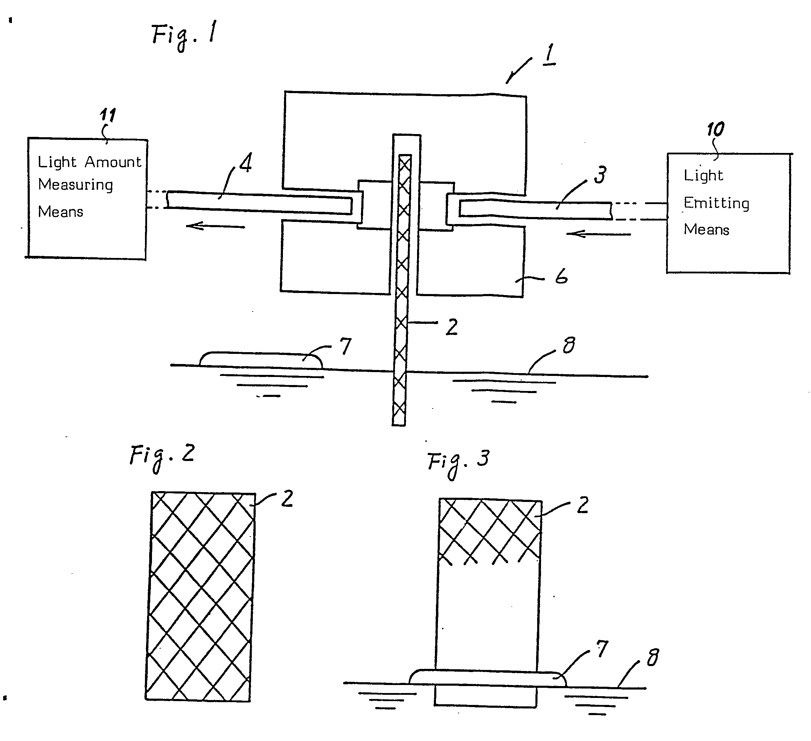

By referring to Fig. 1, the light sending means 3 (optical fiber) and the light receiving means 4 are optically connected via the liquid contact means 2 consisting of a porous expanded polytetrafluoroethylene tape. Said liquid contact means 2, light sending means 3 and light receiving means 4 are respectively clamped by a supporting means 6 made of light transmitting plastic or glass, thereby forming the light transmission-type liquid detection sensor 1.

The light sent from the light emitting means 10 respectively passes from said light sending means 3 and enters a light amount measuring means 11 through said light sending means 3, the transmitting part of said supporting means 6, said liquid contact means 2 and the transmitting part of said supporting means 6 and said light receiving means 4.

The liquid contact means 2 indicated in Fig. 2 is formed by a sheet of porous expanded polytetrafluoroethylene (hereinafter referred to as E-PTFE). This E-PTFE has a porous structure of continuous air holes as explained in detail in the Japanese Laid-open Patent No. 51-9284. Accordingly, this material selectively transmits a gas or liquid, and also repels water and absorbs oil and other organic solvents.

The condition of arranging said liquid contact means 2 having the aforementioned properties on the water surface is explained with reference to Fig. 3. Since said liquid contact means 2 is formed by E-PTFE, leakage oil 7 repelling water and straying on the water surface 8 penetrates into the liquid contact means 2. As a result, the surface of said liquid contact means 2 becomes smooth owing to said leakage oil 7, causing less refraction of light. Therefore, the light sent by said light sending means 3 and reaching said light receiving means 4 increases and said leakage oil can be detected by detecting the increase of light amount at said light amount measuring means 11 which is optically connected to said light receiving means. If the liquid to be detected is crude oil, the light transmissivity first increases and then decreases when the tar element is absorbed. Such behavior can also be observed when the light shielding member is provided in the organic solvent.

Since the liquid detection is carried out optically, the liquid detection senor of the present invention is intrinsically safe unlike the sensor of prior art.

As explained above, the light transmission-type liquid detection sensor of the present invention comprises said light sending means and said light receiving means with said liquid contact means inbetween. Therefore, the amount of light sent by said light sending means to said light receiving means increases or decreases as compared to the status before the liquid to be detected penetrated into said liquid contact means. Since said light receiving means is optically connected with said light amount recognition means, penetration of liquid can be detected as an increase or decrease in the amount of light.

Because of optical sensing, the liquid detecting sensor of the present invention is intrinsically safe unlike that of the prior art.

This system is superior in long term reliability as compared to the prior art system for detecting leakage of liquid by direct contact of oil with an optical fiber.

While the present invention has been described with respect to a specific embodiment thereof, it is to be understood that the present invention is not limited thereto in any way but covers any and all changes and modifications, such as the material and structure of the liquid detecting means, light sending means and light receiving means and provision of a light amount comparison means to the light amount recognition means to generate an alarm based on difference of comparison values, within the scope of the technical concept disclosed in the claims thereof.

## Claims

1. Light transmitting-type liquid detection sensor (1) characterized by: a light sending means (3), a light receiving means (4), a liquid contact means (2) provided between said light sending means (3) and said light receiving means (4) wherein the light transmissivity of said liquid contact means (2) changes according to the amount of absorption of the liquid to be detected, and a light amount recognition means (11) which is optically connected to said light receiving means (4).

2. Light transmitting-type liquid detection sensor as claimed in claim 1, characterized in that said liquid contact means (2) is formed of porous material suitable to take up said liquid to be detected by capillary action.

3. Light transmitting-type liquid detection sensor as claimed in claim 1 or 2, characterized in that said liquid contact means (2) is formed by porous expanded polytetrafluoroethylene.

4. Light transmitting-type liquid detection sensor as claimed in any of claims 1 through 3, characterized in that at least one of said light sending means (3) or said light receiving means (4) is formed by an optical fiber.

Fig. 1

Light Amount Measuring Means 11

Light Emitting Means 10

Fig. 2

Fig. 3